# EUROPEAN PATENT APPLICATION

(11) **EP 2 402 600 A2**
(43) Date of publication of application: **04.01.2012**
(21) Application number: 11171563.7
(22) Date of filing: 27.06.2011
(51) Int. Cl.: F03D 7/02

(54) **Wind turbine and method for operating a wind turbine**

(30) Priority: 29.06.2010 US 825951
(71) Applicant: General Electric Company, Schenectady, NY 12345 (US)
(72) Inventor: Menke, Detlef, 49505 Lotte (DE)
(74) Representative: Bedford, Grant Richard

(57) **Abstract**

The present disclosure is related to a method for operating a wind turbine (100), the wind turbine comprising a wind rotor (160) and a generator (170) connected to the wind rotor, wherein the generator is adapted to be connected to a grid, wherein the method comprises: generating a signal for at least one of a run-up event or starting event of the wind turbine based on a predicted efficiency of at least one component (135, 165, 160, 175, 170, 180, 190, 200, 220) of the wind turbine. Further, the present disclosure is related to a wind turbine (100) comprising a wind rotor (160), wherein the wind rotor is mechanically connected to a generator (170) for transmitting the rotational power of the wind rotor to the rotor of the generator, wherein the output current of the generator is adapted to be selectively connected to a grid (210) by a circuit breaker (190), the wind turbine further comprising a control device (220) adapted to close the circuit breaker, wherein the control device is adapted to generate a signal for at least one of a run-up event or starting event of the wind turbine based on a predicted efficiency of at least one component (135, 165, 160, 175, 170, 180, 190, 200, 220) of the wind turbine.

## Description

The present disclosure relates generally to a method for operating a wind turbine. Further, the present disclosure relates to a wind turbine.

When starting a wind turbine, typically, a spinning rotation of a wind rotor or a rotor of a generator is measured and an average of the spinning rotation is calculated. When the wind turbine is rotating in the spinning rotation, a blade pitch is about 60 degrees with respect to the plane of rotation. In the event that this calculated average exceeds a predetermined value of the rotational speed of the wind rotor, the turbine runs up. In the run-up procedure, the blade pitch angle is modified to an operating pitch angle between -1 to 20 degrees with respect to the plane of rotation. After the run-up procedure, the turbine goes into the state of a load operation. In the load operation, the generator of the wind turbine is connected to the grid. In a typical embodiment, if the wind speed exceeds a predetermined wind speed, for example 25 m/s, the wind turbine is stopped.

In a further embodiment, a wind turbine starts with the checking of an operational status of the most important systems. Typically, the wind rotor is arrested by a parking brake. Typically, the rotor blades are then in a feathered position. In the event that the check of the system was positive, that means, that no error or important error was detected, the jaw or azimuth system turns the wind turbine in the wind direction. In some embodiments, the wind rotor is still braked. Then, the wind speed is measured. The rotor blades are moved into the wind by a blade pitch system, when the wind speed is within the operating range of the wind turbine, for example 6 to 24 m/s. In a typical embodiment, the wind turbine is started if the wind speed exceeds a predetermined speed, for example 3,5m/s. In other embodiments, the azimuth turns the wind turbine in the wind direction, when the wind speed is within the operating range of the wind turbine. Then, in the event that wind rotor is braked, the parking brake is released. Then, the wind rotor accelerates up to the synchronization speed of the generator which converts the rotating energy into electrical energy. Finally, the generator is connected to the grid. In low wind conditions, there may be the risk that the generator of the wind turbines may work motor conditions.

In view of the above, a method for operating a wind turbine is provided, the wind turbine including a wind rotor and a generator connected to the wind rotor, wherein the generator is adapted to be connected to a grid, wherein the method includes: generating a signal for at least one of a run-up event or starting event of the wind turbine based on a predicted efficiency of at least one component of the wind turbine.

According to another aspect, a method for operating a wind turbine is provided, the wind turbine including a wind rotor and a generator connected to the wind rotor, wherein the generator is adapted to be connected to a grid, wherein the method includes: generating a signal for at least one of a run-up event or starting event of the wind turbine based on a predicted power output of the wind turbine that is based on at least one of a predicted electrical or mechanical power consumption of at least one component of the wind turbine.

According to a further aspect, a wind turbine including a wind rotor is provided, wherein the wind rotor is mechanically connected to a generator for transmitting the rotational power of the wind rotor to the rotor of the generator, wherein the output current of the generator is adapted to be selectively connected to a grid by a circuit breaker, the wind turbine further including a control device adapted to close or to trip the circuit breaker, wherein the control device is adapted to generate a signal for at least one of a run-up event or starting event of the wind turbine based on a predicted efficiency of at least one component of the wind turbine.

Various aspects, advantages and features of the present invention are apparent from the dependent claims, the description and the accompanying drawings, in which:
Fig. 1 shows schematically an embodiment of a wind turbine;
Fig. 2 shows schematically functional components of an embodiment of a wind turbine.
Fig. 3 shows schematically an embodiment of a drive train of a wind turbine; and
Fig. 4 shows a flowchart of an embodiment of a method.

Reference will now be made in detail to the various embodiments, one or more examples of which are illustrated in each figure. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

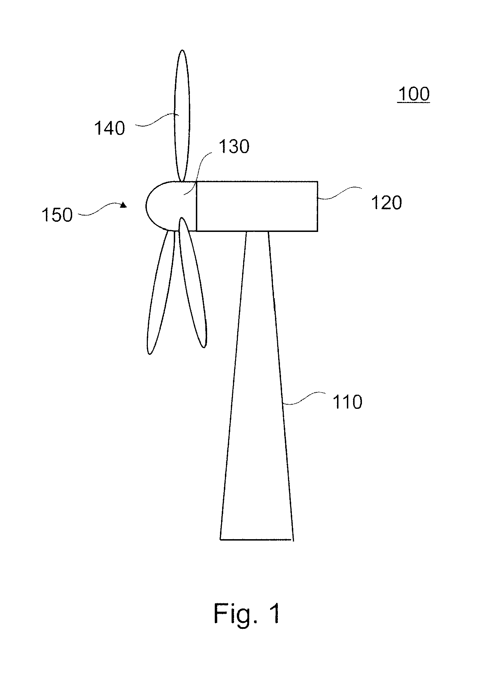

Fig. 1 shows a wind turbine 100. The wind turbine 100 includes a tower 110 on which a nacelle 120 is mounted. The nacelle 120 is rotatable about a vertical axis of the tower. Within the nacelle 120, a generator (not shown) for transforming rotational energy into electrical energy is placed. The generator is connected to a hub 130 that is rotatable about a horizontal axis. Three rotor blades 140 are connected to the hub 130. The rotor blades 140 and the hub 130 together form a wind rotor of the wind turbine 100. The wind turbine 100 operates as follows. In a typical situation, the nacelle 120 is rotated about the vertical axis such that the horizontal axis of the hub 130 is approximately parallel to a wind direction. The wind exerts a torque on the wind rotor due to an aerodynamical profile of the rotor blades 140. Accordingly, the wind rotor rotates about its horizontal axis, thus driving the generator. The generator transforms the mechanical rotation into an electric current. Hence, the kinetic energy of the wind is transformed into electric energy.

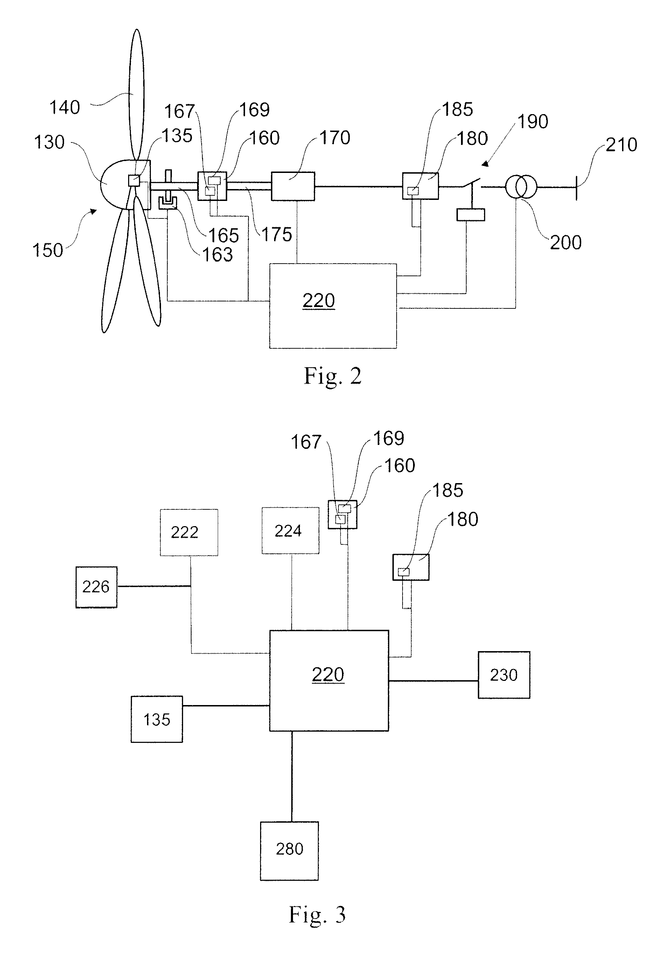

Fig. 2 shows a schematic drawing of some functional elements of a wind turbine. The wind rotor 150 is coupled to a gear box 160 via a wind rotor shaft 165, wherein the gear box 160 converts a first rotational speed of the wind rotor 150 to a second rotational speed that is adapted for a generator 170 which is connected to the output side of the gear box 160 with a generator rotor shaft 175. In a typical embodiment, the drive train of a wind turbine may be defined by the mechanical components of the wind turbine. For example, in an embodiment, the drive train includes the wind rotor shaft 165, the gear box 160, and the generator rotor shaft 175. The generator rotor shaft 175 drives a rotor of the generator 170. The produced electrical current of the generator 170 is then fed in a typical embodiment into an inverter 180 which is connected via a circuit breaker 190 and a transformer 200 to a grid 210. The wind turbine further includes a control device 220 which may control, in a typical embodiment, for example, the pitch of the rotor blades, a brake 163 of the wind rotor, the gear box 160, in particular the temperature of the gear box 160 with a temperature sensor 167, and a heating 169 of the gear box, the generator 170, the inverter 180, a cooling device 185 for the inverter, the circuit breaker 190, and the transformer 200. In a typical embodiment, the brake 163 is arranged at the wind rotor shaft 165. In other embodiments, the brake may be arranged at the generator rotor shaft 175.

Typically, the wind turbine has a specific efficiency which is determined by the efficiency of each component of the wind turbine. For example, the inverter of the wind turbine consumes energy. Further, some energy may be needed for a pitch control of the wind rotor. In another embodiment, the heating 169 of the gear box consumes energy. Typically the cooling device 185 also needs energy. The energy consumed by these devices may depend, for example, on the temperature of the respective device or the ambient temperature. In a typical embodiment, the drive train of the wind turbine has mechanical losses, for example due to friction. This may, in an embodiment, consume power, as not all power of the wind rotor is provided to the rotor of the generator 170.

Typically, the pitch of each blade 140 of the wind rotor 150 may be controlled individually by a pitch drive 135, dependent on the angular position of the rotor blade 140. Thus, the pitch drive may, in a typical embodiment, also consume energy.

In a further embodiment, when a gear box 160 is used between the rotor shaft 165 and the generator shaft 175, the gear box 160 has a specific efficiency, such that some energy of the wind rotor 150 is lost during the transmission to the rotor of the generator 170. Further losses of energy may occur for example in the inverter 180 and the transformer 200.

Typically, the generator 170 itself consumes power, e.g. for the excitation windings in the rotor of the generator 170. For example, in permanent magnets excited generator, the permanent magnets have a magnetization which is dependent on the temperature. Thus, a weakening field has to be produced to provide the optimal magnetic field for the generator. This also may consume some power.

When the wind turbine is connected to the grid 210, the generator 170 produces power that is fed into the grid 210. However, the wind turbine has an own consumption of power that reduces the efficiency of the wind turbine. The own consumption may depend for example on the temperature of the individual parts of the wind turbine, for example the temperature of the gear box, and the ambient temperature. Further, the power consumption of the wind turbine may depend on the configuration of the wind turbine. For example, the number of inverter modules used may depend on the power that is produced by the wind turbine.

Typically, only the difference between the power that is produced and the power that is consumed by the wind turbine 100 is fed into the grid. The power that is consumed by the wind turbine 100 is not constant, but changes. Further, the wind turbine has also some mechanical losses, for example in the gear box 160 and or the bearings of the wind rotor shaft 165, which may depend on the ambient temperature or the temperature of the gear box or the bearing respectively, or the oil temperature in the respective devices.

In a typical embodiment, the consumption of the wind turbine is based on electrical and mechanical losses. Thus, the efficiency of the wind turbine is based on the electrical and mechanical losses.

Typically, when a wind turbine is started, the control device 220 checks an operational status of the some of the systems, for example, the inverter 180, the transformer 200, the gear box 160, the pitch drive 135. Typically, the wind rotor is arrested in a stand still position by the parking brake 163. In further embodiments, the wind rotor is not arrested by the parking brake 163 during a stand-by operation. For example, the rotor blades 140 are then in a feathered position. In the event that the check of the system was positive, that means, that no error or important error was detected, the jaw or azimuth system turns the wind turbine in the wind direction, for example, if the mean wind speeds exceeds a predetermined value. Then, in an embodiment, the wind speed may be again measured. For example, an anemometer may measure the wind speed. The rotor blades are moved into the wind by the pitch drive 135, for example into a spinning positon, for example to accelerate the wind rotor 150 to a spinning rotation, when the wind speed is within the operating range of the wind turbine, for example 6 to 24 m/s. In a typical embodiment, the wind rotor 150 is accelerated to spinning rotation, when the wind speed exceeds 3.5 m/s. Then, the parking brake is released, in case it was activated. In a typical embodiment, the pitch drive 135 turns the rotor blades 140 to about 65 degrees with respect to the rotating plane of the wind rotor 150. Typically, the wind rotor accelerates up to a spinning rotation speed, which is below a rotation speed when the wind turbine is connected to the grid. A spinning rotation speed is, in a typical embodiment, between 0.5 and 1.5 rpm, in particular between 0.8 and 1 rpm.

Then, a run-up event is triggered by the control device 220, when the control device has decided that the wind turbine will produce enough energy to be connected to the grid. When the run-up event is triggered, the wind turbine may start a run-up procedure. Typically, in a run-up procedure, the blade pitch angle is modified to an operating pitch angle between -1 to 20 degrees with respect to the plane of rotation. The wind turbine is accelerated up to a switch-on speed of the wind turbine, and then the generator is connected to the grid 210. Typically, the switch-on speed may be a predetermined speed at which the generator is ideally connected to the grid.

The inspection interval of some components of the wind turbine may depend on the number of times the wind turbine is connected to the grid. For example, the circuit breaker 190 has to be inspected after 4000 switching operations. In a further embodiment, the remuneration of energy provided to the grid operator may depend on the minimum of electric power fed into the grid 210. Thus, it may be important for a wind turbine operator to know before the run-up procedure is started, if the wind turbine will produce enough power to be connected successfully to the grid 210. If the wind turbine does not provide enough energy for the grid, it has to be disconnected from the grid, and a shut-down procedure may be started.

Typically, to prevent that a wind turbine is shut down just after a run-up, the actual environment and the configuration of the turbine are considered while creating an event of starting the turbine or when connecting the generator to the grid 210.

In a typical embodiment, all power consumers may be defined as components where the power of the wind rotor is lost in the wind turbine. For example, the environmental conditions and/or the turbine configuration of at least a part of the power consumers may be taken into account before triggering a run-up event for starting the wind turbine or for connecting the wind turbine to the grid.

In a typical embodiment, a run-up event is not only controlled by a run-up rotation speed of the wind rotor 150 parameter, but is calculated on the estimation of the produced power of the wind turbine that can be fed into the grid. Typically, if this variant exceeds a predetermined limit, the turbine will start. The predetermined value or threshold value may be configured dependent on the location of the wind turbine.

Thus, the wind turbine starts with a run-up, if the Pᵣₒₜₒᵣ ― Pconsumed > P_{feed} into the grid, wherein Pᵣₒₜₒᵣ is the calculated/estimated power that the rotor will produce when the wind turbine runs, in particular, when the wind turbine is connected to the grid, P_{consumed} is calculated/estimated power that is consumed by the wind turbine, in particular when the wind turbine is connected to the grid; and P_{feedintothegrid} is the minimum power value that can be fed into the grid. This value may be configured.

Thus, if the estimated or predicted power to be fed into the grid is too low or below a threshold value, the run-up event is not triggered by the control device. Thus, the number of inspections that depend on the number of connections of the wind turbine to the grid, for example for the circuit breaker, may be reduced. Hence, maintenance costs may be saved. Typically, the start-up of the wind turbine depends on the energy or power balance. The start-up parameters are calculated dynamically.

In a typical embodiment, which may be combined with other embodiments, the power that will be generated by the wind rotor may be estimated or predicted when the wind rotor 150 is in a spinning rotation, by using, for example, the wind rotor speed, a blade angle, wind direction and/or historical data. The historical data may improve the power calculations.

Fig. 3 shows an embodiment of a schematic configuration of the control device 220. The control device is connected to at least one temperature sensor 222 for sensing the ambient temperature, a speed determining device 224 for determining the rotational speed of the wind rotor 150. Further, the control device is connected to a wind speed sensing device 226 and a data storage device 280. The data storage device may contain historical data of temperature, wind speed, weather conditions, wind direction and the produced electrical energy under these conditions. Further, the data storage device 280 may include information about the power curve of the wind turbine 100. Another magnet temperature sensor 230 may be positioned to sense the temperature of the generator, in particular to sense the temperature of the magnets of the generator 170. A further temperature sensor 167 measures the temperature of the gear box oil. In a further embodiment, a temperature sensor for sensing the temperature of the inverter or the temperature of the transformer 200 may be provided. In a typical embodiment, the internal power consumption, for example of the heating 180 of the gear box, the exciting windings of the generator 170, or the cooling device of the inverter is measured. For example, the total efficiency of the wind turbine when connected to the grid may be predicted based on the predicted efficiencies of some or all components of the wind turbine.

Typically, when the wind turbine 100 is ready to start, for example after maintenance or after a low-wind situation, the control device 220 calculates, dependent on the sensed weather conditions, a predicted wind rotor power. In a further step, the control device calculates or estimates the internal power consumption or the efficiency of the components of the wind turbine generator. The internal power consumption may be calculated dependent on the environmental conditions, for example the weather, for example if it rains or snows, ambient temperature, air pressure, the configuration of the wind turbine, for example number of activated inverters, the use or the wear of the gear box, the gear box oil temperature and the like.

In an embodiment, the power consumption is based on the actual efficiency of the components, the configuration of the turbine and in environmental conditions. For example, the components' efficiency varies depending on the actual gear box oil temperature, the number of used or activated main frequency converters, the generator temperature, the inverter temperature and the like. Further, in some embodiments, the configurations of a wind turbine may vary. For example, the wind turbine may be adapted for cold weather extreme enhancements. Further examples of configurations are the type of the main converter, the type of generator, the blade type. For example, the blades may be configured with a specific tip configuration. For example, the rotor blades may have a shark tip, a tip vain, and the like. Further, the wind turbine configuration depends on the number of rotor blades, the aerodynamic airfoil, the rotor blade twist, and the like.

In case the difference between the predicted wind rotor power and the predicted power consumption of the wind turbine exceeds a predetermined threshold, the control device may trigger a starting event and/or the wind turbine is started, for example the wind turbine is turned into the wind, and the wind rotor brakes are released.

In a further embodiment, when the wind rotor is already rotating, for example the wind rotor is in a spinning rotation, but the generator has not yet been connected to the grid, the wind rotor power may be predicted by determining the rotational speed of the wind rotor, the pitch angle of the rotor blades, and in a specific embodiment also historical data. In a further step, the predicted power consumption of the wind turbine when connected to the grid is calculated. If the difference between the predicted power consumption of the wind turbine and the wind rotor power exceeds a predetermined threshold value, in particular for more than 60 seconds, the control device may trigger a run-up event, and subsequently the generator may be connected to the grid. Thus, an adaptive start-up procedure and an adaptive connection to the grid are provided. Typically, the annual energy production may be improved in low wind conditions.

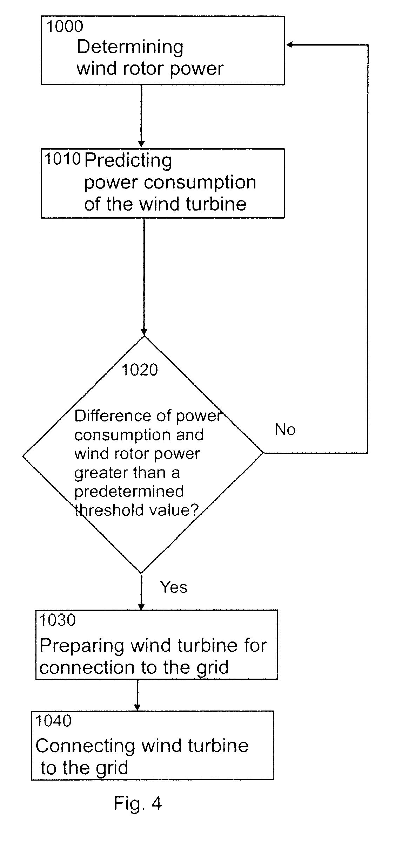

Fig. 4 shows a typical embodiment of a method for operating a wind turbine. In step 1000, the wind rotor power is determined. In a further step 1010, an internal power consumption of the wind turbine is predicted. In a further step 1020, the wind rotor power is compared with the predicted internal power consumption of the wind turbine. The comparison may determine, if the difference between the determined wind rotor power and the predicted internal power consumption exceeds a predetermined threshold value. In case the difference between the wind rotor power and the estimated internal power consumption exceeds the predetermined threshold value, the wind turbine is prepared for connecting the generator of the wind turbine to the grid (step 1030). For example, the wind rotor speed is accelerated to the suitable speed for the generator. This may be performed by modifying the rotor blade angle. Then, the wind turbine is connected to the grid (step 140).

In a typical embodiment, a method for operating a wind turbine is provided, wherein the wind turbine includes a wind rotor and a generator connected to the wind rotor. The generator of the wind turbine is adapted to be connected to a grid. Typically, the method includes generating a signal for at least one of a run-up event or starting event of the wind turbine based on a predicted efficiency of at least one component of the wind turbine.

In a typical embodiment, which may be combined with other embodiments disclosed herein, the predicted efficiency is the estimated efficiency of the at least one component for when the wind turbine were to be connected to the grid.

In another embodiment, the at least one component of the wind turbine is selected from the group including: the gear box, the inverter, the generator, the transformer, the drive train, and the controller.

In a further embodiment, which may be combined with other embodiments disclosed herein, the predicted efficiency of the at least one component is based on a predicted power consumption of the at least one component.

In a typical embodiment, the power consumption is an electrical power consumption. In a further embodiment, the predicted efficiency of at least one component is based on a predicted power consumption of the heating of the gear box, a predicted power consumption of a cooling device or an inverter, a predicted power consumption of excitation windings of the generator, or a predicted power consumption of a field weakening of the generator.

In another embodiment, the predicted power consumption of the at least one component is based on an actual power consumption of the at least one component.

In a further embodiment, which may be combined with other embodiments disclosed herein, the predicted power consumption is based for example on the actual gear box temperature, actual power needed for heating the gear box temperature, actual inverter temperature, actual power needed for cooling the inverter, or actual temperature of the permanent magnet of the generator. In a further embodiment, the power consumption may include the mechanical losses, for example of the drive train of the wind turbine.

Typically, the predicted efficiency of the at least one component is based on an actual efficiency of the at least one component.

In a typical embodiment, which may be combined with other embodiments disclosed herein, the generating of a signal for a run-up event or starting event of the wind turbine is further based on a predicted power output of the wind turbine.

In another embodiment, the signal for at least one of the run-up event or starting event of the wind turbine comprises generating based on the relation of the predicted power output to a predetermined power threshold.

Typically in an embodiment, which may combined with one embodiment disclosed herein, the signal for run-up event or starting event of the wind turbine is generated when the predicted power output exceeds the predetermined threshold for a predetermined time, in particular for 30 to 180 seconds, typically for 60 seconds. In a further embodiment, the predetermined time may exceed 60 seconds.

In a further embodiment, after the run-up event signal, the wind turbine adapts the wind rotor speed to a switch on speed of the generator, wherein the switch-on speed is a predetermined speed of the rotor of the generator at which the generator is ideally connected to the grid, and connects the generator of the wind turbine. Typically, the switch on speed is the speed of the rotor of the generator, when the generator is optimally connected to the grid.

In a typical embodiment, which may be combined with other embodiments disclosed herein, the pitch angle is configured to accelerate to wind rotor up to the synchronization speed of the generator.

According to a further embodiment, which may be combined with other embodiments disclosed herein, the predicted power output or the predicted efficiency of the at least one component is further based on at least one value selected from a group including actual wind rotor speed, actual rotor blade angle, and actual wind direction, actual wind speed, actual configuration of the wind turbine, and actual environmental conditions.

In another embodiment, the predicted efficiency of the at least one component is further based on recorded data.

In a further embodiment, the recorded data includes data adapted for determining the efficiency of the wind turbine or of at least one component of the wind turbine when the wind turbine was connected to the grid.

In a typical embodiment, the recorded data includes data adapted for determining the efficiency of the wind turbine or of at least one component of the wind turbine, when the wind turbine was connected to the grid, dependent on for example the wind speed, wind direction, the rotor blade angle, the temperature of the components, in particular the oil temperature of the gear box, the inverter temperature, and/or the ambient temperature.

According to a further aspect, a method for operating a wind turbine is provided. The wind turbine includes a wind rotor and a generator connected to the wind rotor. Further, the generator is adapted to be connected to a grid. Typically the method includes: generating a signal for at least one of a run-up event or starting event of the wind turbine based on a predicted power output of the wind turbine that is based on at least one of a predicted electrical or mechanical power consumption of at least one component of the wind turbine.

In a typical embodiment, which may be combined with other embodiments disclosed herein, the predicted power output is the estimated power output for when the wind turbine were to be connected to the grid.

According to another aspect a wind turbine including a wind rotor is provided. The wind rotor is mechanically connected to a generator for transmitting the rotational power of the wind rotor to the rotor of the generator. Typically, the output current of the generator is adapted to be selectively connected to a grid by a circuit breaker. The wind turbine further includes a control device adapted to close or to trip the circuit breaker, wherein the control device is adapted to generate a signal for at leat one of a run-up event or starting event of the wind turbine based on a predicted efficiency of at least one component of the wind turbine.

In a further embodiment, which may be combined with other embodiments disclosed herein, the at least one component of the wind turbine is selected from the group including: a gear box, an inverter, the generator, a transformer, a drive train, a pitch drive and a controller.

This written description uses examples, including the preferred mode, to enable any person skilled in the art to make and use the described subject-matter. While various specific embodiments have been disclosed in the foregoing, those skilled in the art will recognize that the spirit and scope of the claims allows for equally effective modifications. Especially, mutually non-exclusive features of the embodiments described above may be combined with each other. The patentable scope is defined by the claims, and may include such modifications and other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A method for operating a wind turbine, the wind turbine comprising a wind rotor and a generator connected to the wind rotor, wherein the generator is adapted to be connected to a grid, wherein the method comprises:
   generating a signal for at least one of a run-up event or starting event of the wind turbine based on a predicted efficiency of at least one component of the wind turbine.
2. The method according to clause 1, wherein the predicted efficiency is the estimated efficiency of the at least one component for when the wind turbine were to be connected to the grid.
3. The method according to any preceding clause, wherein the at least one component of the wind turbine is selected from the group comprising: a gear box, an inverter, the generator, a transformer, a drive train, a pitch drive and a controller.
4. The method according to any preceding clause, wherein the predicted efficiency of the at least one component is based on a predicted power consumption of the at least one component.
5. The method according to any preceding clause, wherein the predicted power consumption of the at least one component is based on an actual power consumption of the at least one component.
6. The method according to any preceding clause, wherein the predicted efficiency of the at least one component is based on an actual efficiency of the at least one component.
7. The method according to any preceding clause, wherein the generating of at least one of the signal for a run-up event or starting event of the wind turbine is further based on a predicted power output of the wind turbine.
8. The method according to any preceding clause, wherein the signal for at least one of the run-up event or starting event of the wind turbine comprises generating based on the relation of the predicted power output to a predetermined power threshold.
9. The method according to any preceding clause, wherein the signal for run-up event or starting event of the wind turbine is generated when the predicted power output exceeds the predetermined threshold for a predetermined time.
10. The method according to any preceding clause, further comprising:
   after the run-up event signal, the wind turbine adapting the wind rotor speed to a switch-on speed of the generator, wherein the switch-on speed is a predetermined speed of the rotor of the generator at which the generator is ideally connected to the grid, and connecting the generator of the wind turbine to the grid.
11. The method according to any preceding clause, wherein the predicted efficiency of the at least one component is further based on at least one value selected from a group comprising actual wind rotor speed, actual rotor blade angle, actual wind direction, actual wind speed, actual configuration of the wind turbine, and actual environmental conditions.
12. The method according to any preceding clause, wherein the predicted efficiency of the at least one component is further based on recorded data.
13. The method according to any preceding clause, wherein the recorded data comprises data adapted for determining the efficiency of the wind turbine or of at least one component of the wind turbine when the wind turbine was connected to the grid.
14. A method for operating a wind turbine, the wind turbine comprising a wind rotor and a generator connected to the wind rotor, wherein the generator is adapted to be connected to a grid, wherein the method comprises:
   - generating a signal for at least one of a run-up event or starting event of the wind turbine based on a predicted power output of the wind turbine that is based on at least one of a predicted electrical or mechanical power consumption of at least one component of the wind turbine.
15. The method according to any preceding clause, wherein the predicted power output is the estimated power output for when the wind turbine were to be connected to the grid.
16. The method according to any preceding clause, wherein the signal for at least one of the run-up event or starting event of the wind turbine is generated, when the predicted power output exceeds the predetermined threshold for a predetermined time.
17. The method according to any preceding clause, further comprising
   after the run-up event signal, the wind turbine adapting the wind rotor speed to a switch-on speed of the generator, wherein the switch-on speed is a predetermined speed at which the generator is ideally connected to the grid, and connecting the generator of the wind turbine to the grid.
18. A wind turbine comprising a wind rotor, wherein the wind rotor is mechanically connected to a generator for transmitting the rotational power of the wind rotor to the rotor of the generator, wherein the output current of the generator is adapted to be selectively connected to a grid by a circuit breaker, the wind turbine further comprising a control device adapted to close the circuit breaker, wherein the control device is adapted to generate a signal for at least one of a run-up event or starting event of the wind turbine based on a predicted efficiency of at least one component of the wind turbine.
19. The wind turbine according to any preceding clause, wherein the predicted efficiency is the estimated efficiency of the at least one component for when the wind turbine would be connected to the grid.
20. The wind turbine according to any preceding clause, wherein the at least one component of the wind turbine is selected from the group comprising: a gear box, an inverter, the generator, a transformer, a drive train, a pitch drive and a controller.

## Claims

1. A method for operating a wind turbine (100), the wind turbine comprising a wind rotor (160) and a generator (170) connected to the wind rotor, wherein the generator is adapted to be connected to a grid, wherein the method comprises:
generating a signal for at least one of a run-up event or starting event of the wind turbine based on a predicted efficiency of at least one component (135, 165, 160, 175, 170, 180, 190, 200, 220) of the wind turbine.

2. The method according to claim 1, wherein the predicted efficiency is the estimated efficiency of the at least one component for when the wind turbine were to be connected to the grid.

3. The method according to one of the preceding claims, wherein the at least one component of the wind turbine is selected from the group comprising: a gear box (160), an inverter (180), the generator (170), a transformer (200), a drive train (165, 160, 175), a pitch drive (135), and a controller (220).

4. The method according to one of the preceding claims, wherein the predicted efficiency of the at least one component is based on a predicted power consumption, an actual efficiency and/or an actual power consumption of the at least one component, wherein in particular the predicted efficiency of the at least one component is further based on at least one value selected of a group comprising actual wind rotor speed, actual rotor blade angle, and actual wind direction, actual wind speed, actual configuration of the wind turbine, actual environmental conditions, and/or wherein in particular the predicted efficiency of the at least one component is further based on recorded data, in particular wherein the recorded data comprises data adapted for determining the efficiency of the wind turbine or of at least one component of the wind turbine (100) when the wind turbine was connected to the grid.

5. The method according to one of the preceding claims, wherein the generating of the signal for at least one of a run-up event or starting event of the wind turbine (100) is further based on a predicted power output of the wind turbine, wherein in particular the predicted power output is based on at least one value selected from a group comprising actual wind rotor speed, actual rotor blade angle, actual wind direction, actual wind speed, actual configuration of the wind turbine (100), and actual environmental conditions.

6. The method according to one of the preceding claims, wherein the signal for run-up or starting of the wind turbine (100) is generated based on the relation of the predicted power output to a predetermined power threshold, in particular when the predicted power output exceeds the predetermined threshold for a predetermined time, in particular for 30 to 180 seconds.

7. The method according to one of the preceding claims, further comprising: after the run-up event signal, the wind turbine adapting the wind rotor speed to a switch on speed of the generator, and connecting the generator of the wind turbine (100) to the grid.

8. A wind turbine (100) comprising a wind rotor (160), wherein the wind rotor is mechanically connected to a generator (170) for transmitting the rotational power of the wind rotor to the rotor of the generator, wherein the output current of the generator is adapted to be selectively connected to a grid (210) by a circuit breaker (190), the wind turbine further comprising a control device (220) adapted to close the circuit breaker, wherein the control device is adapted to generate a signal for at least one of a run-up event or starting event of the wind turbine based on a predicted efficiency of at least one component (135, 165, 160, 175, 170, 180, 190, 200, 220) of the wind turbine.

9. The wind turbine (100) according to claim 8, wherein the predicted efficiency is the estimated efficiency of the at least one component for when the wind turbine were to be connected to the grid.

10. The wind turbine (100) according to claim 8 or 9, wherein the at least one component of the wind turbine is selected from the group comprising: a gear box (160), an inverter (180), a generator (170), a transformer (200), a drive train (165, 160, 175), a pitch drive (135), and a controller (220).
